Europäisches Patentamt

European Patent Office

Office européen des brevets

(19)

(11) EP 0 545 760 B1

(12) FASCICULE DE BREVET EUROPEEN

(45) Date de publication et mention
de la délivrance du brevet:
**08.10.1997 Bulletin 1997/41**

(51) Int Cl.6: **H04B 10/14**

(21) Numéro de dépôt: **92403123.0**

(22) Date de dépôt: **20.11.1992**

(54) **Préamplificateur pour récepteur optique**

Vorverstärker für einen optischen Empfänger

Preamplifier for an optical receiver

(84) Etats contractants désignés:
**BE DE FR GB IT NL**

(30) Priorité: **29.11.1991 FR 9114812**

(43) Date de publication de la demande:
**09.06.1993 Bulletin 1993/23**

(73) Titulaire: **THOMSON-CSF SEMICONDUCTEURS
SPECIFIQUES
75008 Paris (FR)**

(72) Inventeur: **Grasset, Jean-Charles
F-92402 Courbevoie Cédex (FR)**

(74) Mandataire: **Guérin, Michel et al
THOMSON-CSF-S.C.P.I.,
13, Avenue du Président
Salvador Allende
94117 Arcueil Cédex (FR)**

(56) Documents cités:
EP-A- 0 409 259          DE-A- 2 720 614
US-A- 4 139 767

• **PATENT ABSTRACTS OF JAPAN vol. 14, no. 213
(E-923)7 Mai 1990 & JP-A-20 50 534**
• **PATENT ABSTRACTS OF JAPAN vol. 11, no. 32
(P-541)30 Janvier 1987 & JP-A-61 202 124**

## Description

L'invention concerne les dispositifs récepteurs de signaux lumineux, notamment (mais non exclusivement) les signaux transmis par fibre optique et qui sont convertis en signaux électriques par une photodiode du type PIN. Elle concerne plus particulièrement les préamplificateurs du type à transimpédance destinés à amplifier ces signaux électriques.

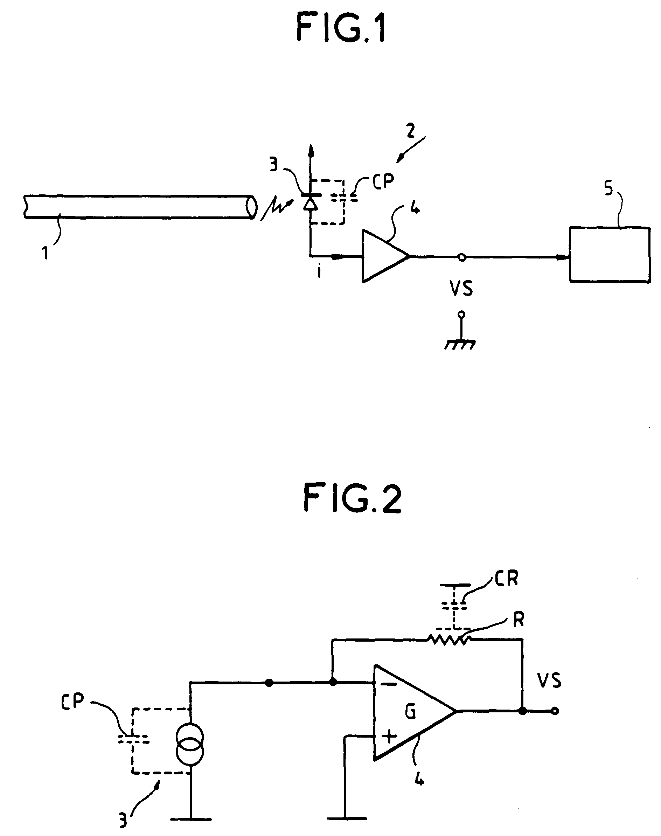

En prenant pour exemple le cas de la transmission d'information par fibre optique, la figure 1 illustre de façon schématique la mise en oeuvre de cette technique.

Des informations sont transmises sous la forme de signaux lumineux, par une fibre optique 1, jusqu'à un récepteur 2. Le récepteur 2 comprend un dispositif photosensible 3 et un amplificateur ou plus précisément un préamplificateur 4.

Le dispositif photosensible 3 convertit les signaux lumineux en signaux électriques qui sont appliqués à l'entrée du préamplificateur 4.

Les signaux électriques de sortie correspondants, délivrés par le préamplificateur 4, sont ensuite transmis à un dispositif d'acquisition 5 afin d'être traités.

Le dispositif photosensible 3 peut être constitué par exemple par un phototransistor ou une photodiode, très souvent il est constitué par une photodiode du type P.I. N. Dans ce dernier cas la photodiode 3 est polarisée en inverse, et elle peut être considérée en petit signal, comme un générateur de courant schunté par une capacité parasite CP (représentée en traits pointillés sur la figure 1). Il est à remarquer que l'élément photosensible peut être d'un type quelconque, dès lors qu'il est inséré dans un montage permettant de réaliser un générateur de courant, produisant un courant i traduisant les signaux lumineux.

Le préamplificateur 4 étant en tête de la chaîne de réception, ses caractéristiques déterminent largement les performances globales du récepteur 2. On recherche généralement pour ce préamplificateur un gain suffisant (souvent important) avec une large bande passante, et un faible bruit équivalent ramené en entrée, afin de détériorer le moins possible la sensibilité intrinsèque du capteur, c'est-à-dire de l'élément photosensible. Le préamplificateur 4 est du type à transimpédance, dans lequel le gain Z est donné par le rapport de la tension de sortie VS sur le courant d'entrée i délivré par l'élément photosensible 3 ($Z = VS/i$).

Des préamplificateurs à transimpédance sont couramment utilisés pour amplifier les signaux délivrés par des photodiodes du type PIN (conductivité P, intrinsèque, conductivité N) ; on trouve notamment la description d'un tel préamplificateur dans un article de Robert G. MEYER ET Robert Alain BLAUSCHILD "A Wide-Band Low-Noise Monolithic Transimpédance Amplifier" publié dans IEEE Journal of Solid-State Circuits, Vol. SC-21, N° 4, August 1986, pages 530 à 533.

La figure 2 montre schématiquement le montage de principe suivant lequel, dans l'art antérieur, les préamplificateurs à transimpédance sont associés à une photodiode PIN, dans le cas notamment où cette dernière reçoit des signaux transmis par une fibre optique.

La photodiode 3 est représentée sous la forme d'un générateur de courant (schunté par la capacité parasite CP). L'amplificateur 4 est un amplificateur de tension à grand gain et à large bande, contre-réactionné par une résistance R. L'élément photosensible ou générateur de courant 3 est relié à l'entrée inverseuse" - " de l'amplificateur.

Ceci constitue un montage de base largement décrit avec différentes optimisations. Mais dans tous les cas, l'un des problèmes importants réside dans a difficulté qu'il y a à obtenir une bande passante BW assez large, (exigée par un débit élevé des informations) tout en conservant une marge de phase suffisante à assurer une bonne stabilité de l'amplificateur.

Il est à noter que la réponse en fréquence du montage illustré à la figure 2 est largement conditionnée, d'une part par la capacité parasite CP de la diode PIN, et d'autre part par la capacité d'entrée CR de l'amplificateur (capacité qui est représentée en traits pointillés comme étant une capacité parasite associée à la résistance R de contre-réaction). Il en résulte une très grande sensibilité de la bande passante et donc de la stabilité, à la valeur de la capacité parasite CP de la diode PIN. Ce détail est particulièrement gênant quand on cherche à disposer d'un préamplificateur aussi universel que possible, c'est-à-dire susceptible de fonctionner avec différents types d'éléments photosensibles et donc avec différentes valeurs de la capacité parasite CP.

Plus précisément la bande passante BW de l'amplificateur dépend aussi de la capacité parasite CR de la résistance R, comme indiqué dans la relation qui suit :

$$BW = 1/2 \, \P \, (CR.R + CP.R/G),$$

où G est le gain de l'amplificateur.

Or, dans la pratique, la capacité parasite CR réduit la bande passante potentielle, et ce d'autant plus que, suivant une démarche générale, on cherche à augmenter R pour minimiser le bruit ramené en entrée.

Il est à noter qu'un autre inconvénient d'un étage préamplificateur réalisé à l'aide d'un amplificateur tel qu'illustré à la figure 2, est que pour maintenir l'efficacité de la contre-réaction le plus loin possible en fréquence, on cherche à rendre très basse l'impédance de sortie de cet amplificateur, ce qui est obtenu au prix d'une consommation en courant importante sur les suiveurs de sortie (non représentés) que comporte de façon classique un tel amplificateur.

En vue d'éviter les inconvénients ci-dessus cités, la présente invention propose d'associer l'élément photosensible, tel qu'une photodiode du type PIN par exemple, à deux étages préamplificateurs formés chacun par un transistor bipolaire du type polarisé en base commune, l'entrée du préamplificateur étant l'émetteur de ce transistor, et la photodiode étant connectée entre les entrées des deux préamplificateurs.

L'un des avantages d'une telle disposition résulte de l'absence de contre-réaction autour de cet étage, d'où l'absence de risques d'accrochage dû à une éventuelle insuffisance de marge de phase. Il y a donc un élargissement de la bande passante utile. D'autre part, dans un montage de ce type, l'impédance d'entrée est maintenu très basse, de telle sorte que les capacités parasites (et entre autres la capacité parasite de l'élément photosensible) n'altèrent pas la réponse en fréquence visée.

Les brevets DE-A-2720 614 et EP-A-0-409 259 ont été déposé, montrant les avantages de l'utilisation, dans des systèmes optiques, d'amplificateurs fonctionnant en base commune, mais ils ne comportent qu'un préamplificateur, la photodiode n'étant pas connectée en différentiel entre deux préamplificateurs. Le brevet US-A-4 139 767 décrit un montage différentiel mais il utilise des étages d'entrée MOS à haute impédance. Le brevet japonais JP-A-61 202124 montre un montage différentiel spécial à compression logarithmique.

L'invention concerne donc un récepteur de signaux lumineux comportant un dispositif photosensible délivrant un courant électrique dit "utile" en réponse aux signaux lumineux, un préamplificateur dont au moins une entrée reçoit le courant utile, le préamplificateur comportant au moins un transistor d'entrée du type bipolaire dont une électrode est reliée à ladite entrée, le préamplificateur comportant en outre au moins un moyen de polarisation relié à la base du transistor d'entrée, afin d'imposer à cette base un potentiel fixe, le collecteur et l'émetteur du transistor d'entrée étant reliés respectivement à un premier et un second potentiels d'alimentation par l'intermédiaire respectivement d'une résistance de charge et d'une résistance d'émetteur l'électrode reliée à l'entrée étant l'émetteur, le collecteur délivrant des signaux de tension fonction du courant utile, caractérisé en ce que le préamplificateur comporte une seconde entrée reliée à l'électrode d'un second transistor d'entrée, le second transistor d'entrée étant polarisé par des seconds moyens de polarisation afin d'imposer à la base du second transistor d'entrée une tension fixe, le dispositif photosensible étant inséré entre les deux entrées, de manière que le courant utile soit amplifié par le préamplificateur suivant un fonctionnement de type différentiel.

L'invention sera mieux comprise à la lecture de la description qui suit, faite en référence aux dessins annexés parmi lesquels :

- la figure 1 déjà décrite illustre la technique de la transmission d'information par fibre optique ;
- la figure 2 déjà décrite représente un étage préamplificateur classique d'un récepteur de signaux lumineux ;
- la figure 3 est le schéma d'une version simplifiée d'un préamplificateur suivant l'invention ;

- la figure 4 est le schéma d'une version préférée d'un préamplificateur suivant l'invention.

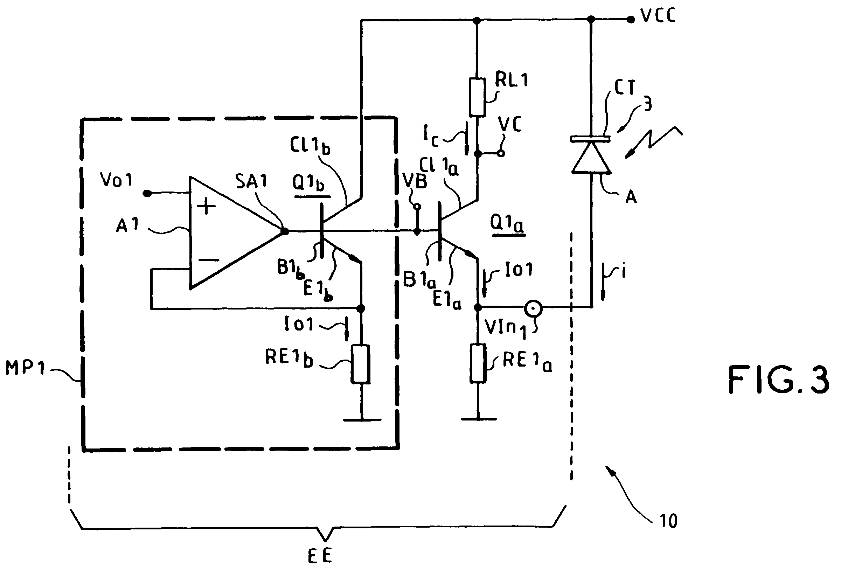

La figure 3 montre un préamplificateur 10 conforme à l'invention, utilisé dans un récepteur pour signaux lumineux transmis par exemple par une fibre optique (non représentée) comme dans l'exemple de la figure 1. Le récepteur est partiellement représenté par le préamplificateur 10 et par un dispositif photosensible 3 dont le rôle est de convertir les signaux lumineux en signaux électriques.

Dans l'exemple non limitatif montré à la figure 3, le dispositif photosensible 3 est représenté sous la forme d'une photodiode (par exemple une photodiode du type PIN), mais comme il a déjà été indiqué plus haut, tout autre élément photosensible peut être utilisé, l'important étant d'obtenir un courant utile proportionnel aux signaux lumineux ou lié à ceux-ci par une loi connue.

Suivant une caractéristique de l'invention, le préamplificateur 10 comporte un étage d'entrée constitué par un transistor d'entrée $Q1_a$ du type bipolaire, polarisé suivant un montage du type en base commune, et attaqué en courant par l'élément photosensible 3. Dans l'exemple non limitatif, le transistor d'entrée $Q1_a$ est du type NPN et l'entrée $VIN_1$ de l'étage d'entrée du préamplificateur, c'est-à-dire le point de ce dernier auquel est relié l'élément photosensible 3, est situé sur l'émetteur $E1_a$ du transistor d'entrée $Q1_a$.

La préamplification des signaux électriques d'entrée délivrés par l'élément photosensible 3, c'est-à-dire du courant électrique d'entrée est assurée par le transistor d'entrée $Q1_a$, dont le collecteur $CI1_a$ délivre des signaux de sortie correspondants aux signaux d'entrée amplifiés, sous la forme d'un même courant Ic qui débite dans une résistance de charge RL1. A cette fin, le collecteur $CI1_a$ est relié par l'intermédiaire de a résistance de charge RL1, à un potentiel d'alimentation VCC positif. L'alimentation positive VCC est à un potentiel de +5 volts par exemple, par rapport au potentiel de la masse auquel est relié l'émetteur $E1_a$ par l'intermédiaire d'une résistance d'émetteur $RE1_a$.

La photodiode 3 est polarisée en inverse : son anode A est reliée à l'émetteur $E1_a$ du transistor d'entrée $Q1_a$ et sa cathode CT est reliée à l'alimentation positive + VCC.

Le transistor d'entrée $Q1_a$ est polarisé de manière à déterminer son courant émetteur de repos $Io_1$, en maintenant fixe la tension sur sa base $B1_a$. A cet effet, en plus de la résistance d'émetteur $RE1_a$, le préamplificateur 10 comporte des moyens de polarisation $MP_1$ (représentés dans un cadre en traits pointillés) constitués dans l'exemple par un amplificateur opérationnel A1 et par un second transistor bipolaire $Q1_b$ du même type que le transistor d'entrée $Q1_a$ ; plus précisément les transistors $Q1_a$ et $Q1_b$ sont appariés de sorte que soumis à de mêmes conditions ils se comportent d'une même manière.

L'entrée positive "+" de l'ampli opérationnel A1 est reliée à une tension de référence V01 comprise entre la masse et le potentiel positif VCC. La sortie $SA_1$ de l'amplificateur A1 est reliée à la fois à la base $B1_b$ du second transistor $Q1_b$ et à la base $B1_a$ du transistor d'entrée $Q1_a$. L'entrée inverseuse"-" de l'ampli opérationnel est reliée à l'émetteur $E1_b$ du second transistor $Q1_b$, lequel émetteur est relié à la masse par l'intermédiaire d'une seconde résistance d'émetteur $RE1_b$. Enfin, le collecteur $CI1_b$ du second transistor $Q1_b$ est relié directement à la polarité positive + VCC. On peut aussi s'arranger pour que le potentiel statique de collecteur du second transistor $Q1_b$ soit porté à une valeur voisine de celle du potentiel auquel est porté le collecteur du transistor d'entrée $Q1_a$, par exemple en insérant une résistance (non représentée) en série avec le collecteur du second transistor $Q1_b$.

Dans ces conditions, l'amplificateur constitué par l'ampli opérationnel A1 et le second transistor $Q1_b$ a un gain de 1, de telle sorte que la tension de référence Vo1 appliquée à l'entrée positive + se retrouve sur les émetteurs $E1_a$ et $E1_b$ des transistors $Q1_a$ et $Q1_b$.

On note qu'ainsi la diode photosensible 3 est bien polarisée en inverse.

En supposant que la tension de référence $Vo_1$ ait par exemple une valeur de 3 volts, si l'on confère par exemple une valeur de 6.000 ohms à chacune des deux résistances d'émetteur $RE1_a$, $RE1_b$, les transistors $Q1_a$ et $Q1_b$ étant identiques ils ont chacun un courant émetteur au repos $Io_1$ égal à 0,5mA, c'est-à-dire que le courant dans les résistances d'émetteur est imposé à 0,5 mA. Le courant collecteur Ic étant pratiquement égal au courant émetteur (le courant de base étant faible il est négligé), le potentiel Vc du collecteur, au repos (sur $Q1_a$) est égal au potentiel d'alimentation VCC diminué du produit du courant de repos $Io_1$ par la résistance de charge $RL_1$, soit VCC - $(RL_1 x Io_1)$ ; ceci correspond à une tension collecteur Vc de + 4,25v si l'on confère une valeur de par exemple 1.500 ohms à la résistance de charge RL.

La photodiode 3 exposée à un éclairement, c'est-à-dire recevant les informations sous forme de signaux lumineux, se comporte comme un générateur de courant et délivre un courant utile i. D'une manière courante, le courant utile i peut avoir une valeur comprise entre par exemple 0,5 microampère et 300 microampères, et dont les variations se répercutent de manière sensiblement proportionnelle au niveau de la tension collecteur Vc.

Le potentiel VB sur la base du transistor d'entrée $Q1_a$ est fixe et il ne varie pas quelles que soient les variations du courant utile i (il peut être utile à cet effet de placer une capacité (non représentée) entre la base $B1_a$ et la masse par exemple). En conséquence, le potentiel sur l'émetteur $E1_a$ du transistor d'entrée $Q1_a$ étant quasi fixe également à la valeur de la tension de référence $VO_1$, ceci impose dans la résistance d'émetteur $RE1_a$ un courant fixe et constant égal à $VO_1/RE1_a$.

Il en résulte que quand la photodiode 3 délivre un courant utile i, le courant de repos $Io_1$ propre au transistor d'entrée en est modifié d'autant, c'est-à-dire que le courant collecteur Ic diminue d'une valeur sensiblement égale à celle du courant utile i. Il en résulte une variation positive de la tension Vc au collecteur $CI1_a$ : par exemple l'apparition d'un courant utile i de 20 microampères est traduite par une variation positive de 0,03 volt (si RL = 1.500 ohms), et un courant utile de 300 microampères engendre une variation positive de 0,450 volts.

Un montage de l'étage d'entrée d'un pré-amplificateur tel que ci-dessus décrit est particulièrement intéressant, notamment par le fait que l'étage n'est pas contre-réactionné ; ce qui tend à élargir la bande utile en fréquence.

D'autre part, l'impédance d'entrée exprimée par la relation Ut/IE étant maintenue très basse, la constante de temps Ut/IE x (CP + Cbe) n'altère pas la réponse en fréquence visée ; Ut étant égal à K.T/q, où K est la constante de Boltzmann ; T est la température absolue ; q est la charge d'un électron (Ut étant égal sensiblement à 26 mV à 25°C) ; IE. étant le courant émetteur : CP étant la capacité parasite de la photodiode 3 ; Cbe étant la capacité base-émetteur (non représentée). En fait pratiquement on peut s'arranger pour que la seule limitation en fréquence soit donnée par la constante de temps $R_L.C_o$ où $R_L$ est la résistance de charge et $C_o$ est la capacité parasite (non représentée) vue sur le noeud de sortie du pré-amplificateur.

La dynamique d'entrée n'est fonction que de la sensibilité et de la réserve de tension continue disponible sur le collecteur du transistor d'entrée $Q1_a$. Il est à noter que des essais effectués avec un montage conforme à l'invention ont montré la possibilité d'obtenir des dynamiques de courant utile i de l'ordre de 1000 avec VCC = 5 volts.

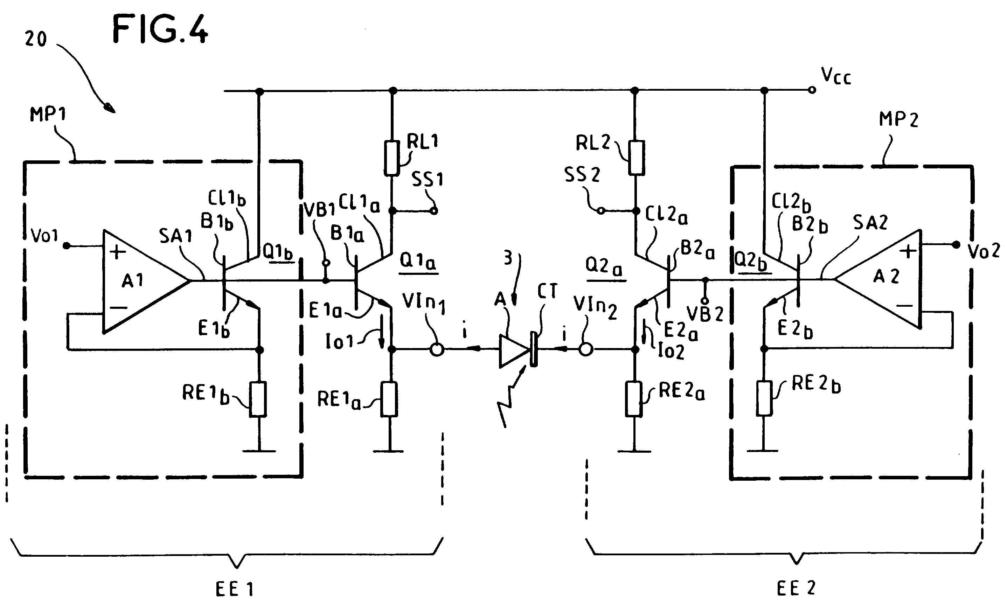

La figure 4 est le schéma d'une forme de réalisation préférée de l'invention, dans laquelle le générateur de courant que forme le dispositif photosensible 3 (lui-même constitué dans l'exemple non limitatif décrit uniquement par une diode photosensible) est lu par un préampliticateur 20 de type différentiel, c'est-à-dire un montage comportant deux entrées formées chacune par un étage d'entrée du type de celui réalisé à l'aide du transistor d'entrée $Q1_a$ montré à la figure 3.

Sur la figure 4, l'anode A de la photodiode est reliée à l'émetteur $E1_a$ du transistor d'entrée $Q1_a$ d'une même manière que dans l'exemple explicité en référence à la figure 3, et d'une même manière qu'à la figure 3 ce transistor d'entrée est relié aux moyens de polarisation MP1.

Ces moyens de polarisation MP1 sont eux-mêmes identiques, à l'exception toutefois de la valeur de la tension de référence $Vo_1$ et des valeurs des résistances d'émetteur $RE1_b$, $RE1_a$.

Par rapport à la figure 3, la différence réside dans le fait que la cathode CT de la photodiode 3 n'est pas reliée à la polarité positive + VCC, mais qu'elle est reliée à une seconde entrée V $In_2$ d'un second étage d'entrée dont la structure est en tous points semblable à celle illustrée à la figure 3. Cette seconde entrée VIn$_2$ est située sur l'émetteur E2$_a$ d'un second transistor d'entrée Q2$_a$ lui-même d'un même type que le premier transistor d'entrée Q1$_a$, c'est-à-dire de type bipolaire NPN dans l'exemple.

D'une même manière que le premier transistor d'entrée Q1$_a$, le second transistor d'entrée Q2$_a$ est polarisé en base commune par des seconds moyens de polarisation MP$_2$, semblables aux premiers moyens MP$_1$. Les seconds moyens de polarisation MP$_2$ comportent un second amplificateur opérationnel A2 dont l'entrée positive "+" reçoit une seconde tension de référence Vo$_2$. La sortie SA2 du second amplificateur A2 est reliée à la fois à la base B2$_a$ du second transistor d'entrée Q2$_a$ et à la base d'un second transistor NPN de contre-réaction Q2$_b$ ; comme dans l'exemple précédent, ces deux transistors Q2$_a$ et Q2$_b$ sont appariés. Dans l'exemple le collecteur du second transistor Q2$_b$ de contre-réaction est relié directement au potentiel positif + VCC, et son émetteur E2$_b$ est relié à la masse par une résistance d'émetteur RE2$_b$ ; mais comme dans le cas de l'étage d'entrée déjà expliqué référence à la figure 3, le collecteur du second transistor Q2$_b$ peut être relié au potentiel VCC par l'intermédiaire d'une résistance.

Les autres connexions du second transistor d'entrée Q2$_a$ sont les suivantes : son collecteur CL2$_a$ est relié au potentiel positif + VCC par l'intermédiaire d'une seconde résistance de charge RL2 ; et son émetteur E2$_a$ est relié à la masse par une résistance d'émetteur RE2$_a$, cet émetteur E2$_a$ étant en outre relié à la cathode CT de la photodiode 3.

Dans ces conditions, le préamplificateur 20 comporte deux étages d'entrée EE1, EE2, pouvant fonctionner chacun d'une manière semblable à celle déjà expliquée pour l'étage d'entrée EE constitué par les premiers moyens de polarisation MP1 et le premier transistor d'entrée Q1$_a$ montrés à la figure 3.

Les amplificateurs A1, A2 associés respectivement aux transistors de contre-réaction Q1$_b$ et Q2$_b$, n'ont qu'un rôle de polarisation en maintenant les potentiels VB$_1$, VB$_2$ corrects sur les bases B1$_a$ et B2$_a$ des transistors actifs, c'est-à-dire des transistors d'entrée Q1$_a$ et Q2$_a$. Ceci afin d'imposer à ces derniers le courant de repos Io$_1$, Io$_2$ voulu, tout en imposant sur les émetteurs E1$_a$ et E2$_a$ (et donc aux entrées VIn$_1$ et VIn$_2$ de ces transistors), des potentiels continus différents, appropriés à polariser en inverse la photodiode 3.

Ainsi par exemple la première et a seconde tension de référence VO1, VO2 peuvent avoir respectivement une valeur de 1,5 Volts et 3 Volts, valeurs que l'on retrouve respectivement sur la première et sur la seconde entrée VIn$_1$, VIn$_2$ ; la photodiode 3 est ainsi polarisée en inverse.

Malgré ce décalage de tension entre les deux émetteurs des transistors d'entrée Q1$_a$, Q2$_a$, ceux-ci peuvent avoir néanmoins un courant de repos IO$_1$, IO$_2$ de même valeur, en conférant aux résistances d'émetteurs des valeurs appropriées : par exemple 3.000 ohms aux résistances d'émetteur RE1$_a$ et RE1$_b$ du premier étage d'entrée EE1, et donc une valeur double soit 6.000 ohms pour les résistances d'émetteur RE2$_a$ et RE2$_b$ du second étage d'entrée EE2. Dans ces conditions, les courants de repos IO$_1$ et IO$_2$ établis respectivement dans les premier et second transistors d'entrée Q1$_a$ et Q2$_a$ ont une même valeur de 0,5 mA.

Les première et seconde résistances de charge RL1, RL2 peuvent avoir une même valeur, par exemple 1.500 ohms.

Quand la photodiode 3 reçoit des signaux lumineux, elle traduit ces signaux par un courant utile i qui est appliqué simultanément aux deux étages EE1, EE2. La présence de ce courant utile i provoque sur le premier étage d'entrée EE1, des effets identiques à ceux déjà expliqués en référence à la figure 3, et elle engendre sur le second étage d'entrée EE2 des effets semblables mais de signe contraire.

La présence du courant utile i a pour effet de réduire le courant dans le premier transistor d'entrée Q1$_a$, (d'une même manière que dans l'exemple de la figure 3), et au contraire d'augmenter le courant du second transistor d'entrée Q2$_a$. En effet, dans l'exemple montré à la figure 4, le courant utile i qui circule dans la photodiode 3 est formé d'une partie du courant émetteur du second transistor d'entrée Q2$_a$, mais cette part ne passe pas dans la résistance d'émetteur RE2$_a$ et donc ne provoque pas la chute de tension correspondante. D'autre part, la tension est maintenue fixe sur la base B2$_a$ de ce second transistor d'entrée Q2$_a$, ce qui a pour effet d'exiger une augmentation du courant émetteur de ce dernier afin de conserver le courant initialement imposé dans la résistance d'émetteur RE2$_a$, c'est-à-dire sur la seconde entrée VIn$_2$.

Ainsi l'apparition d'un courant utile i engendre des variations de tension de signes opposés en sortie SS1, SS2 des transistors d'entrée Q1$_a$, Q2$_a$, c'est-à-dire sur les collecteurs de ces derniers. Compte tenu de l'exemple montré à la figure 4 où l'anode A de la photodiode 3 est reliée à l'émetteur E1$_a$ du premier transistor d'entrée Q1$_a$, l'apparition du courant utile i provoque une variation positive de tension en sortie SS1 du premier transistor d'entrée ; et une variation négative en sortie SS2 du second transistor d'entrée Q2$_a$. Bien entendu la situation peut être inversée, mais notamment avec des transistors du type NPN, c'est toujours le transistor d'entrée qui est polarisé avec la tension de référence VO1, VO2 de valeur la plus faible, qui affiche en sortie ne variation de tension de même signe que la variation du courant utile i.

Il est à noter qu'une réalisation de l'invention de type différentiel, tel qu'expliqué ci-dessus, présente des avantages importants du fait qu'elle permet d'obtenir deux signaux de sortie SS1, SS2 complémentaires. Ces deux signaux de sortie complémentaire permettent "d'attaquer" en différentiel les circuits suivants de la chaîne de réception. Il en résulte tous les avantages attachés à un montage différentiel, entre autres : une amélioration du rapport signal/bruit, car on augmente davantage le gain que le bruit dans la version de la figure 4 par rapport à celle montrée à a figure 3 ; et aussi une meilleure réjection des alimentations souvent bruitées par les commutations des sorties.

En outre, l'avantage d'une configuration différentielle est un élément de choix décisif quant aux performances avec circuits intégrés bipolaires à isolation par jonction. En effet, sur ces technologies tout montage à entrée "single" (à entrée unique) induit potentiellement des risques d'accrochages, dus à une réaction entrée-sortie provoquée par les inductances parasites d'accès (sur l'alimentation VCC) et la capacité parasite caisson substrat des résistances.

La description a été faite en référence à des transistors du type NPN, mais l'invention peut s'appliquer aussi dans le cas de transistors du type PNP avec des distributions de potentiels opposés à creux montrés aux figures 3 et 4.

## Revendications

1. Récepteur de signaux lumineux comportant un dispositif photosensible (3) délivrant un courant électrique (i) dit "utile" en réponse aux signaux lumineux, un préamplificateur (10, 20) dont au moins une entrée ($VIn_1$) reçoit le courant utile (i), le préamplificateur comportant au moins un transistor d'entrée du type bipolaire ($Q1_a$) dont une électrode est reliée à ladite entrée ($VIn_1$), le préamplificateur (10, 20) comportant en outre au moins un moyen de polarisation (MP1) relié à la base ($B1_a$) du transistor d'entrée ($Q1_a$), afin d'imposer à cette base un potentiel ($VB_1$) fixe, le collecteur ($C11_a$) et l'émetteur ($E1_a$) du transistor d'entrée ($Q1_a$) étant reliés respectivement à un premier et un second potentiels d'alimentation (VCC, masse) par l'intermédiaire respectivement d'une résistance de charge (RL1) et d'une résistance d'émetteur ($RE1_a$), l'électrode reliée à l'entrée ($VIn_1$) étant l'émetteur ($E1_a$), le collecteur ($C11_a$) délivrant des signaux de tension fonction du courant utile (i), caractérisé en ce que le préamplificateur (20) comporte une seconde entrée ($VIn_2$) reliée à l'électrode d'un second transistor d'entrée ($Q2_a$), le second transistor d'entrée ($Q2_a$) étant polarisé par des seconds moyens de polarisation (MP2) afin d'imposer à la base ($B2_a$) du second transistor d'entrée ($Q2_a$) une tension fixe, le dispositif photosensible (3) étant inséré entre les deux entrées ($VIN_1$ et $VIN_2$), de manière que le courant utile (i) soit amplifié par le préamplificateur (20) suivant un fonctionnement de type différentiel.

2. Récepteur suivant la revendication 1, caractérisé en ce que le dispositif photosensible comporte une photodiode (3) polarisée en inverse.

3. Récepteur suivant la revendication 2, caractérisé en ce que la photodiode est du type PIN.

4. Récepteur suivant l'une des revendications précédentes, caractérisé en ce que les signaux lumineux sont transmis par une fibre optique.

5. Récepteur suivant l'une des revendications précédentes, caractérisé en ce que le transistor d'entrée ($Q1_a$) est du type bipolaire NPN.

6. Récepteur suivant l'une des revendications précédentes, caractérisé en ce que le moyen de polarisation (MP1) comporte un amplificateur (A1) dont une entrée non inverseuse (+) reçoit une tension de référence ($VO_1$), la sortie ($SA_1$) de l'amplificateur étant reliée à la fois à la base ($B1_a$) du transistor d'entrée ($Q1_a$) et à la base ($B1_b$) d'un transistor de contre-réaction ($Q1_b$) dont l'émetteur ($E1_b$) est relié à une entrée inverseuse (-) de l'amplificateur (A1).

7. Récepteur suivant la revendication 6, caractérisé en ce que l'émetteur ($E1_B$) du transistor de contre-réaction ($Q1_b$) est relié en outre au second potentiel d'alimentation (masse) par l'intermédiaire d'une résistance d'émetteur ($RE1_b$).

8. Récepteur suivant la revendication 7, caractérisé en ce que les résistances d'émetteurs ($RE1_a$, $RE1_b$) des transistors d'entrée et de contre-réaction ($Q1_a$, $Q1_b$) ont une même valeur.

9. Récepteur suivant l'une des revendications 6 ou 7, ou 8, caractérisé en ce que le transistor d'entrée ($Q1_a$) et le transistor de contre-réaction ($Q1_b$) sont appariés.

10. Récepteur suivant l'une des revendications 1 à 9, caractérisé en ce que les deux entrées ($VIn_1$, $VIn_2$) sont portées à des potentiels différents.

11. Récepteur suivant l'une des revendications 1 à 10, caractérisé en ce que le second transistor d'entrée ($Q2_a$) et les seconds moyens de polarisation (MP2) forment un étage agencé d'une même manière que l'étage formé par le premier transistor d'entrée ($Q1_a$) et les premiers moyens de polarisation ($MP_1$).

12. Récepteur suivant la revendication il, caractérisé en ce que les premiers moyens de polarisation ($MP_1$), reçoivent une première tension de référence ($VO_1$) dont la valeur est différente de celle d'une seconde tension de référence ($VO_2$) appliquée aux seconds moyens de polarisation ($MP_2$).

13. Récepteur suivant la revendication 12, caractérisé en ce que les deux transistors d'entrée ($Q1_a$, $Q2_a$) ont des résistances d'émetteur ($RE1_a$, $RE2_a$) de va-

leurs différentes dans un même rapport que celui de la différence des tensions de références (VO$_1$, VO$_2$).

14. Récepteur suivant l'une des revendications 1 à 13, caractérisé en ce que les collecteurs (C11$_a$, C12$_a$) des transistors d'entrée (Q1$_a$, Q2$_a$) délivrent des signaux de tension en opposition de phase.

**Patentansprüche**

1. Empfänger für Lichtsignale mit einer lichtempfindlichen Vorrichtung (3), die einen elektrischen Nutzstrom (i) aufgrund der Lichtsignale liefert, mit einem Vorverstärker (10, 20), von dem mindestens ein Eingang (VIn$_1$) den Nutzstrom (i) empfängt und der mindestens einen bipolaren Eingangstransistor (Q1$_a$) enthält, von dem eine Elektrode an den Eingang (VIn$_1$) angeschlossen ist, wobei der Vorverstärker (10, 20) weiter mindestens ein Vorspannungsmittel (MP$_1$) enthält, das an die Basis (B1$_a$) des Eingangstransistors (Q1$_a$) angeschlossen ist, um an dieser Basis ein Fixpotential (VB$_1$) festzulegen, während der Kollektor (Cl1$_a$) und der Emitter (E1$_a$) des Eingangstransistors (Q1$_a$) mit einem ersten bzw. zweiten Speisepotential (VCC, Masse) über einen Lastwiderstand (RL1) bzw. einen Emitterwiderstand (RE1$_a$) verbunden sind, wobei die an den Eingang (VIn$_1$) angeschlossene Elektrode der Emitter (E1$_a$) ist und der Kollektor (Cl1$_a$) Spannungssignale liefert, die vom Nutzstrom (i) abhängen, dadurch gekennzeichnet, daß der Vorverstärker (20) einen zweiten Eingang (VIn$_2$) besitzt, der an die Elektrode eines zweiten Eingangstransistors (Q2$_a$) angeschlossen ist, daß der zweite Eingangstransistor (Q2$_a$) durch zweite Vorspannungsmittel (MP$_2$) so vorgespannt ist, daß die Basis (B2$_a$) des zweiten Eingangstransistors (Q2$_a$) eine Festspannung aufgeprägt erhält, und daß die lichtempfindliche Vorrichtung (3) zwischen die beiden Eingänge (VIn$_1$ und VIn$_2$) so eingefügt ist, daß der Nutzstrom (i) durch den Vorverstärker (20) gemäß einem Differentialbetrieb verstärkt wird.

2. Empfänger nach Anspruch 1, dadurch gekennzeichnet, daß die lichtempfindliche Vorrichtung eine in Sperrichtung vorgespannte Fotodiode (3) enthält.

3. Empfänger nach Anspruch 2, dadurch gekennzeichnet, daß die Fotodiode eine PIN-Diode ist.

4. Empfänger nach einem der vorhergehenden Ansprüche, dadurch gekennzeichnet, daß die Lichtsignale von einer Lichtleitfaser übermittelt werden.

5. Empfänger nach einem der vorhergehenden Ansprüche, dadurch gekennzeichnet, daß der Eingangstransistor (Q1$_a$) ein bipolarer Transistor vom NPN-Typ ist.

6. Empfänger nach einem der vorhergehenden Ansprüche, dadurch gekennzeichnet, daß das Vorspannungsmittel (MP$_1$) einen Verstärker (Al) enthält, dessen nicht-invertierender Eingang (+) eine Bezugsspannung (Vo1) empfängt, daß der Ausgang (SA1) des Verstärkers (A1) sowohl an die Basis (B1$_a$) des Eingangstransistors (Q1$_a$) als auch an die Basis (B1$_b$) eines Gegenkopplungstransistors (Q1$_b$) angeschlossen ist, dessen Emitter (E1$_b$) mit einem invertierenden Eingang (-) des Verstärkers (A1) verbunden ist.

7. Empfänger nach Anspruch 6, dadurch gekennzeichnet, daß der Emitter (E1$_b$) des Gegenkopplungstransistors (Q1$_b$) außerdem mit dem zweiten Speisepotential (Masse) über einen Emitterwiderstand (RE1$_b$) verbunden ist.

8. Empfänger nach Anspruch 7, dadurch gekennzeichnet, daß die Emitterwiderstände (RE1$_a$, RE1$_b$) der Eingangs- und Gegenkopplungstransistoren (Q1$_a$, Q1$_b$) gleiche Werte haben.

9. Empfänger nach einem der Ansprüche 6 oder 7 oder 8, dadurch gekennzeichnet, daß der Eingangstransistor (Q1$_a$) und der Gegenkopplungstransistor (Q1$_b$) paarweise ausgesucht sind.

10. Empfänger nach einem der Ansprüche 1 bis 9, dadurch gekennzeichnet, daß die beiden Eingänge (VIn$_1$, VIn$_2$) auf unterschiedliche Potentiale gebracht sind.

11. Empfänger nach einem der Ansprüche 1 bis 10, dadurch gekennzeichnet, daß der zweite Eingangstransistor (Q2$_a$) und die zweiten Vorspannungsmittel (MP$_2$) eine Stufe bilden, die genauso aufgebaut ist wie die Stufe, die vom ersten Eingangstransistor (Q1$_a$) und den ersten Vorspannungsmitteln (MP$_1$) gebildet wird.

12. Empfänger nach Anspruch 11, dadurch gekennzeichnet, daß die ersten Vorspannungsmittel (MP$_1$) eine erste Bezugsspannung (Vo1) empfangen, deren Wert sich von dem einer zweiten Bezugsspannung (Vo2) unterscheidet, die an die zweiten Vorspannungsmittel (MP$_2$) angelegt ist.

13. Empfänger nach Anspruch 12, dadurch gekennzeichnet, daß die beiden Eingangstransistoren (Q1$_a$, Q2$_a$) Emitterwiderstände (RE1$_a$, RE2$_a$) unterschiedlicher Werte besitzen, deren Verhältnis dem der Bezugsspannungsdifferenz (Vol, Vo2) gleicht.

**14.** Empfänger nach einem der Ansprüche 1 bis 13, dadurch gekennzeichnet, daß die Kollektoren ($CI1_a$, $CI2_a$) der Eingangstransistoren ($Q1_a$, $Q2_a$) Spannungssignale in Gegenphase liefern.

## Claims

**1.** Light-signal receiver including a photosensitive device (3) delivering a so-called "useful" electric current (i) in response to the light signals, a preamplifier (10, 20), at least one input ($VIn_1$) of which receives the useful current (1), the preamplifier including at least one input transistor ($Q1_a$) of the bipolar type, one electrode of which is connected to the said input ($VIn_1$), the preamplifier (10, 20) furthermore including at least one biasing means (MP1) connected to the base ($B1_a$) of the input transistor ($Q1_a$) in order to impose a fixed potential ($VB_1$) on this base, the collector ($C11_a$) and the emitter ($E1_a$) of the input transistor ($Q1_a$) being connected respectively to a first and a second supply potential (VCC, earth), respectively via a load resistor (RL1) and an emitter resistor ($RE1_a$), the electrode connected to the input ($VIn_1$) being the emitter ($E1_a$), the collector ($C11_a$) delivering the voltage signals as a function of the useful current (i), characterized in that the preamplifier (20) includes a second input ($VIn_2$) connected to the electrode of a second input transistor ($Q2_a$), the second input transistor ($Q2_a$) being biased by second biasing means ($MP_2$) in order to impose a fixed voltage on the base ($B2_a$) of the second input transistor ($Q2_a$), the photosensitive device (3) being inserted between the two inputs ($VIn_1$ and $VIn_2$) so that the useful current (i) is amplified by the preamplifier (20) according to differential-type operations.

**2.** Receiver according to Claim 1, characterized in that the photosensitive device includes a reverse-biased photodiode (3).

**3.** Receiver according to Claim 2, characterized in that the photodiode is of the PIN type.

**4.** Receiver according to one of the preceding claims, characterized in that the light signals are transmitted via an optical fibre.

**5.** Receiver according to one of the preceding claims, characterized in that the input transistor ($Q1_a$) is of the NPN bipolar type.

**6.** Receiver according to one of the preceding claims, characterized in that the biasing means (MP1) includes an amplifier (A1), a non-inverting input (+) of which receives a reference voltage ($VO_1$), the output ($SA_1$) of the amplifier being connected both to the base ($B1_a$) of the input transistor ($Q1_a$) and to the base ($B1_b$) of a feedback resistor ($Q1_b$), the emitter ($E1_b$) of which is connected to an inverting input (-) of the amplifier (A1).

**7.** Receiver according to Claim 6, characterized in that the emitter ($E1_0$) of the feedback transistor ($Q1_b$) is furthermore connected to the second supply potential (earth) via an emitter resistor ($RE1_b$).

**8.** Receiver according to Claim 7, characterized in that the emitter resistors ($RE1_a$, $RE1_b$) of the input and feedback transistors ($Q1_a$, $Q1_b$) have the same value.

**9.** Receiver according to one of Claims 6 or 7, 8, characterized in that the input transistor ($Q1_a$) and the feedback transistor ($Q1_b$) are paired.

**10.** Receiver according to one of Claims 1 to 9, characterized in that the two inputs ($VIn_a$, $VIn_2$) have different potentials applied to them.

**11.** Receiver according to one of Claims 1 to 10, characterized in that the second input transistor ($Q2_a$) and the second biasing means ($MP_2$) form a stage arranged in the same way as the stage formed by the first input transistor ($Q1_a$) and the first biasing means ($MP_1$).

**12.** Receiver according to Claim 11, characterized in that the first biasing means ($MP_1$) receive a first reference voltage ($VO_1$) whose value is different from that of a second reference voltage ($VO_2$) applied to the second biasing means ($MP_2$).

**13.** Receiver according to Claim 12, characterized in that the two input transistors ($Q1_a$, $Q2_a$) have emitter resistors ($RE1_a$, $RE2_a$) with different values in the same ratio as that of the difference between the reference voltages ($VO_1$, $VO_2$).

**14.** Receiver according to one of Claims 1 to 13, characterized in that the collectors ($C11_a$, $C12_a$) of the input transistors ($Q1_a$, $Q2_a$) deliver voltage signals in phase opposition.

# FIG.1

# FIG.2

FIG.3

EP 0 545 760 B1

# FIG.4

EP 0 545 760 B1